# EUROPEAN PATENT APPLICATION

(11) **EP 2 105 759 A1**
(43) Date of publication of application: **30.09.2009**
(21) Application number: 08005945.4
(22) Date of filing: 28.03.2008
(51) Int. Cl.: G01S 5/02

(54) **Method and systems for carrying out a two way ranging procedure**

(71) Applicant: Identec Solutions AG, 6890 Lustenau (AT)
(72) Inventor: Gantner, Reinhold, 6700 Bludenz (AT); Schwiers, Stefan, 41189 Mönchengladbach (DE); Chauvin, Vincent, 6850 Dornbirn (AT)
(74) Representative: Riebling, Peter

(57) **Abstract**

The invention relates to a method for carrying out a Two Way Ranging, preferably a Symmetrical Double-Sided Two Way Ranging, between a blind node whose position is unknown and to be determined and at least one reference or mobile node whose position is known in order to determine the location of the blind node, wherein the blind node and the reference or mobile node comprise wireless transceivers for transmitting and receiving radio signals. The invention is **characterized in that** the Symmetrical Double-Sided Two Way Ranging is initiated by the blind node.

## Description

### Technical Field of the Invention

The invention relates to a method for carrying out a Two Way Ranging Procedure between a blind node whose position is not known and is to be determined, and at least one reference or mobile node whose position is known in order to determine the location of the blind node.

### Description of the Prior Art

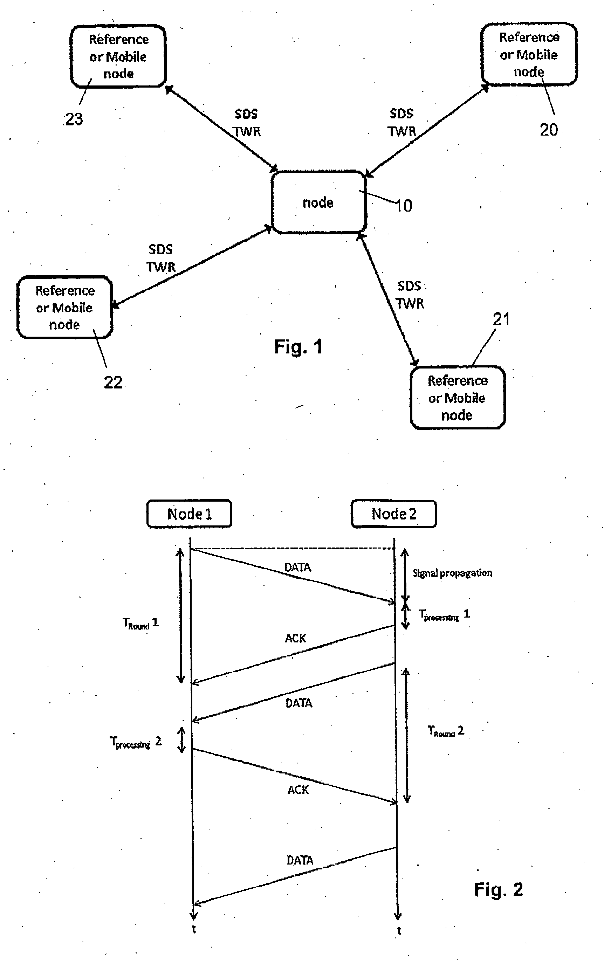

Figure 1 shows a typical setup of a localization procedure of a node 10 using a Two Way Ranging Method, preferably a Symmetrical Double-Sided Two-Way Ranging (SDS TWR) method. However, the invention is not limited to a SDS TWR method but also encompasses any other two way ranging method based on radio signals.

This ranging method is explained with reference to Figure 2. It uses two delays that naturally occur in signal transmission to determine the range (distance) between two wireless transceiver stations, e.g. the node 10 (blind node) and one or several reference or mobile nodes 20, 21, 22, 23. The first delay which is important for the SDS TWR method is the signal propagation delay between two wireless transceiver stations, and the second delay is the processing delay within the wireless transceiver station for sending an acknowledgement.

This method is called Symmetrical Double-Sided Two Way Ranging, because it is symmetrical in that the measurements from a first wireless transceiver station to a second wireless transceiver station are a mirror-image of the measurements from the second wireless transceiver station to the first wireless transceiver station, it is double-sided in that always two transceiver stations are used for ranging measurement, and it is two-way in that a data packet (called a data or standard packet) and an acknowledge packet (Ack) are transmitted between the wireless stations.

The data packet is transmitted from the first wireless transceiver station, e.g. blind node 10, to the second wireless transceiver station, e.g. one of the stations 20, 21, 22, 23. The time difference from when it was sent from the transmitter and received at the receiver is known as the signal propagation delay. The second wireless transceiver station will then acknowledge the reception by sending an acknowledgement packet back to the first wireless transceiver. The time required to process the incoming packet, generate the acknowledgement packet and prepare it for transmission is known as the processing delay T_{Processing}. Upon reception of the acknowledgement packet, the first wireless transceiver will measure the time required between the transmission of the first data packet and the reception of the acknowledgement. This time is known as the two way process delay (T_{round} in figure 2). The two way process delay can also be described as the sum of the signal propagation delays between both transceiver stations and the processing delay.
To increase the accuracy of the range calculation and to decrease the impact of crystal error on each station, the same procedure is repeated by the second wireless transceiver station sending a data packet to the first wireless transceiver station, and the first wireless station acknowledging the reception.
At the end of the procedure or during any transmission of a data packet, either the first wireless transceiver station either the second wireless transceiver station sends to the other station the time measured for the two way process delay and the processing delay.
The two way process delay and the processing delay can then be used in an algorithm to calculate the range (distance) between the two stations.
At the end of the procedure, two range values are determined and an average of the two can be used to achieve a fairly accurate distance measurement between these two stations.

### Summary of the Invention

It is the object of the present invention to propose a method for carrying out a Two Way Ranging method which is energy saving, particularly on the side of the blind node, and only requires a simple infrastructure and less communication traffic.

This object is achieved by providing a method as claimed in the independent claim.

Preferred embodiments and advantageous features of the invention are disclosed in the dependent claims.

The subject of this invention is a node (blind node) in a real time location system whose position is not known in a certain area. This blind node will initiate a Two Way Ranging procedure preferably with several other nodes, reference or mobile nodes, whose positions are known in order to determine its location. In TWR methods known in the prior art the TWR procedure was always initiated by a reference ,node. Thus, the blind node had to be always in an active state all the time to listen to messages sent by the reference nodes. This led to high power consumption on the side of the blind node.

The method according to the present invention has several advantages compared to conventional TWR and SDS TWR methods known in the art. The advantages can be achieved only when the blind node initiates the TWR procedure as taught by the present invention.
First, the method increases battery lifetime, particularly on the side of the blind node. The blind node which is, in most of the times, the only battery power device, is only activated when it requires a TWR. Hence, considerably longer battery life time can be achieved compared to a solution where the blind node needs to listen periodically if TWR is necessary.
Second, there is no synchronization needed between the reference nodes. Using the blind node which requires TWR as an initiator combined with the process of TWR allows an operation without any synchronization between different reference nodes. This results in a simpler infrastructure without cabling between reference nodes and less wireless communication if the synchronization is done wirelessly.
Third, the method allows a TWR on demand. As the process is initiated by the blind node which requires TWR, it is possible to realize TWR on demand based on an event at any point in time. The event can be sensor based (push button, motion, temperature, humidity, etc others more ...), communication based (using other frequencies like LF, UHF or microwave or time based.
Forth, the blind node can display information based on distance. All the information is gathered at the blind node (initiator); therefore it is possible to provide information to a user using an embedded display. It is also possible to attract user attention using an indicator like LED or buzzer if a distance to a reference or mobile node reached a triggered value or if the node is accessed. It is mandatory for pick by light applications.
Fifth, the position of the blind node can be calculated "on board". All the information is gathered at the initiator of the TWR (blind node). Therefore, it is possible to calculate the position of the initiator directly on it if it is required.

The TWR process is initiated by the blind node which requires or wants to perform a TWR or localization. For this, the initiating node (blind node) sends a broadcast packet to all the reference or mobile nodes in its range. The blind node will switch to reception mode just after the broadcast transmission to wait for an answer of the reference or mobile nodes. The initiator will wait for a defined amount of time. While the initiator is in receiving mode, the reference or mobile nodes are able to: - Either indicate their presence by sending a data or standard packet back to the blind node. The blind node will then perform a TWR with the reference or mobile nodes. A selection of reference or mobile nodes can be applied using various metrics like RSSI (strongest signal), angle of arrival, or others which will not be described here.- Either directly performing a TWR with the blind node.

The interference between mobile or reference node packets can be avoided by using random time slots for sending the data packets or listening to the media before the transmission. It is also possible to assign time slots to the mobile or reference nodes. The assignment can be defined during configuration or during a synchronization process between reference or mobile nodes. The TWR could be complemented by a measurement of the RSSI or the Angle of Arrival.

A preferred embodiment of the invention using SDS TWR procedures is described below.

### Brief Description of the Drawings

Figure 1 schematically shows a typical setup for a localization procedure of a node preferably using a SDS TWR method to determine the distances between the node (blind node) and one or several reference or mobile nodes.
Figure 2 is a schematic timing diagram of a typical SDS TWR procedure.
Figure 3 schematically shows a time diagram indicating the TX/RX behavior of the blind node during the initiation of the SDS TWR.
Figure 4 schematically shows a time diagram indicating details of the TX/RX behavior of the blind node during initiation of the SDS TWR.
Figure 5 schematically shows a time diagram indicating the TX/RX behavior of the blind node during SDS TWR procedures started by the blind node.
Figure 6 schematically shows a time diagram indicating the TX/RX behavior of the blind node during SDS TWR procedures started by the reference or mobile nodes.
Figure 7 schematically shows a time diagram indicating details of Figure 5 and the TX/RX behavior of the blind node during SDS TWR procedures started by the reference or mobile nodes.
Figure 8 schematically shows a time diagram indicating details of Figure 6 and the TX/RX behavior of the blind node during SDS TWR procedures started by the reference or mobile nodes

### Detailed Description of Preferred Embodiments of the Invention

The method according to the invention is based preferably on a SDS TWR procedure to locate a blind node 10, as it is described above.

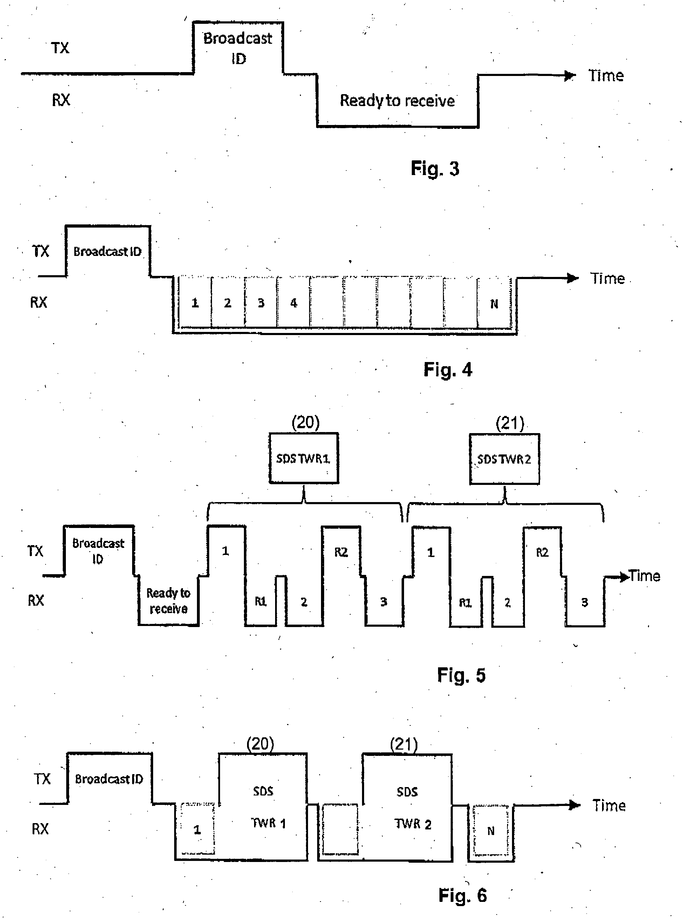

According to the invention, the blind node 10 initiates the ranging process rather than any of the reference or mobile nodes 20-23. As shown in Figure3, the blind node 10 which needs to perform a SDS TWR or localization will initiate the process by broadcasting its identification (ID) within a data packet to all the reference or mobile nodes 20, 21, 22, 23 in its range. Figure 3 shows a time diagram wherein in the upper half signals transmitted (TX) by the blind node 10 are indicated and in the lower half signals received (RX) by the blind node 10 are indicated. The broadcast ID data packet can provide various parameters about the blind node 10 which will not be defined here. As an example, it could be the duration the node will be ready to receive a packet. Parameters can also be defined at a configuration level and fixed during operation. After transmitting its ID the blind node 10 switches to a reception mode and is ready to receive an answer from a reference or mobile node 20-23. For the blind node 10 (initiator) point of view, the initialization is described hereafter:

Two possibilities are then available to perform a SDS TWR. The solution chosen must be defined before the start of the process, either by configuration or as a parameter in the broadcast packet.

In a first embodiment of invention, the reference or mobile nodes 20, 21, 22, 23 indicate their presence in response to an ID broadcast by the blind node 10.
In this mode, depicted in Figure 4, the reference or mobile nodes 20, 21, 22, 23 send a data packet back to the blind node 10 to indicate their presence and their identification (ID). Therefore, the blind node 10 (initiator) must be able to receive a certain number of data packets from several reference or mobile nodes 20, 29, 22, 23. To do so, the receiving time period is separated in several time slots 1...N with a fixed duration which is long enough to receive a packet and to be ready to receive another. The total number N of time slots has to be defined during the configuration or inside the broadcast packet.
The reference or mobile nodes 20, 21, 22, 23 have to send their packet only once and during a time slot. The time slot selected is chosen using a random function, which will not be defined here, or can be assigned during configuration of the system. Reference or mobile nodes 20, 21, 22, 23 are not allowed to transmit data packets to indicate their presence to the initiator after the last time slot.

At the end of the receiving period, the blind node 10 (initiator) is able to perform SDS TWR with the reference or mobile nodes 20, 21, 22, 23 which replied to its broadcast. A selection of the reference or mobile node can be realized on the initiator's side if it received more replies than defined in its configuration. To realize localization only three reference or mobile nodes 20, 21, 22, 23 are necessary but more can be used for redundancy or accuracy purpose.
The selection of reference or mobile nodes to be used for SDS TWR can be done on different metrics like RSSI, angle of arrival, etc. The whole list of metrics available will not be defined here.

After the selection of reference or mobile nodes to be used for SDS TWR, the blind node 10 will perform SDS TWR with the reference or mobile nodes 20-23 selected as described hereafter with reference to Figure 5.

The blind node 10 carries out a first SDS TWR with a first reference or mobile node 20. For this, the blind node 10 sends a first data packet 1 to the node 20. The difference in time from when it was sent from the blind node 10 and received at the reference node 20 is known as the signal propagation delay. The reference node 20 now will then acknowledge receipt by sending an acknowledgement packet R1 back to the blind node 10. The time to process the incoming data packet, generate the acknowledgement packet R1 (Ack packet), and prepare it for transmission is known as processing delay. Upon reception of the acknowledgement packet, the blind node 10 will measure the time required between the transmission of the first data packet and the reception of the acknowledgement packet R1. This time is known as the two way process delay T_{round}. The two way process delay can also be described as the sum of the signal propagation delays between both transceiver stations and the processing delay. To increase the accuracy of the range calculation and to decrease the impact of crystal error on each station, the same procedure is repeated by the reference node 20 sending a second data packet 2 to the blind node 10, and the blind node 10 sending a second acknowledgement packet R2 to the reference node 20. At the end of the procedure or during any transmission of a data packet, either the blind node 10 or the reference node 20 sends to the other station the time measured for the two way process delay and the processing delay. The two way process delay and the processing delay can then be used in an algorithm to calculate the range (distance) between the two nodes 10, 20. At the end of the procedure, two range values are determined and an average of the two can be used to achieve a fairly accurate distance measurement between these two stations.
The same procedure is repeated between the blind node 10 and the remaining reference nodes 21, 22, 23. The blind node 10 (initiator) receives all the measurements required to calculate its distance to all the reference or mobile nodes 20, 21, 22, 23 it realized SDS TWR with. The initiator is able to calculate the distances to the reference nodes and might be able to define its location relative to the reference nodes.
The initiator is also able to broadcast or send all the information gathered (distance and/or measurement) to any reference of mobile node in its range.

Considering that collision may occur when the reference or mobile nodes 20, 21, 22, 23 send back their ID or that some reference or mobile nodes might not be selected based on the metrics, the reference or mobile nodes should be able to receive other broadcast from initiators.
If not enough reference or mobile node send their replies to the blind node 10, it can decide not to realize the SDS TWR.

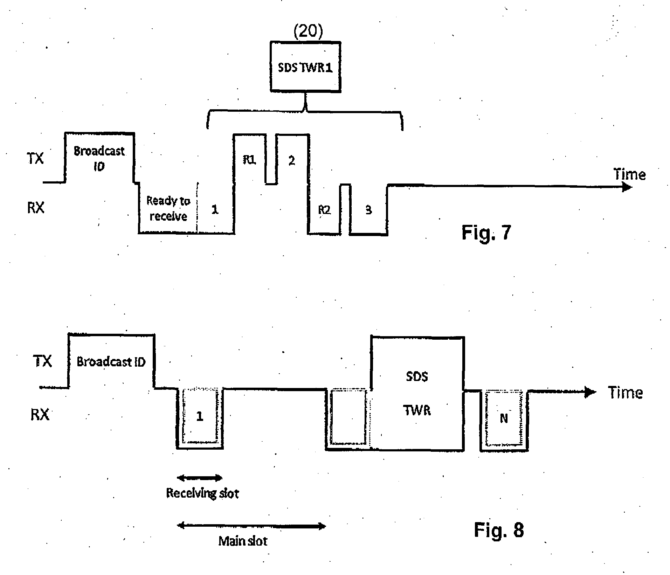

In a second embodiment of the invention, the reference or mobile nodes start SDS TWR upon reception of a broadcast packet from the blind node 10 (initiator). This is shown in Figure 6 and particularly in Figure 7. To accommodate multiple reference or mobile nodes 20, 21, 22, 23, again different time slots 1... N are used. Any receiving time slot has a fixed duration and is long enough to receive a packet. The main time slot (refer to Figure 8) has a fixed duration which is long enough to wait for the receiving time slot and to perform a complete SDS TWR procedure. The total number N of time slots has to be defined during the configuration or inside the broadcast packet.

The reference or mobile nodes 20-23 should select their time slot for transmission using a random time or it can be assigned during configuration. The random function will not be described here. The reference or mobile nodes 20-23 are not allowed to start a SDS TWR with the initiator after the last time slot.

One of the reference nodes 20-23, for example the reference node 20, carries out a first SDS TWR with the blind node 10. For this, the reference node 20 sends a first data packet 1 to the blind node 10. In consequence, as shown in Figure 7, an acknowledgement packet R1 is sent from the blind node 10 back to the reference node 20. The acknowledgement R1 includes in its header two delay values - the signal propagation delay and the processing delay. These delay values can then be used by the reference node 20 to calculate the distance to the blind node 10. To verify that the distance calculation was accurate, the same procedure is repeated by the blind node 10 sending a second data packet 2 to the reference node 20, and the reference node 20 sending a second acknowledgement packet R2 to the blind node 20. By this procedure, two distance values are determined, one at the reference node 20 and one at the blind node 10, and an average of the two values can be used to achieve a fairly accurate distance measurement between these two nodes 10, 20. At the end, the reference node 20 sends its measurements (distance value) in a third data packet 3 to the blind node 10 for further processing.

The same procedure is repeated between the other reference nodes 21-23 and the blind node 10.
During the SDS TWR procedure the blind node 10 (initiator) receives all the measurements required to calculate its distance to all the reference or mobile nodes 20, 21, 22, 23

To save battery (if the nodes are battery powered), the nodes should be able to go into low power mode during the main slot if they are not performing SDS TWR. The blind node 10 (initiator) should be able to go to low power mode if it does not receive the start of a SDS TWR until the end of the receiving time slot. The blind node 10 should go to active mode for the next time slot.

At the end or during the SDS TWR procedure, the reference or mobile nodes 20-23 must send back their measured delays to the initiator 10.
At the end of the process, the initiator 10 gathers all the measurement required to calculate its distance to all the reference or mobile nodes 20-23 it realized SDS TWR with. The initiator 10 (blind node) is able to calculate the distances to the reference nodes and might be able to define its location relative to the reference nodes.
The initiator 10 is also able to broadcast or send all the information gathered (distance and/or measurement) to any reference of mobile node in its range.

### Precision on Mobile nodes

A mobile node is a (reference) node which is moving but which is able to find out its position at a given time. A mobile node could be a blind node who is able to realize localization with the aid of reference nodes and which knows the exact position of these reference nodes. A mobile node could be assisted with alternative technology to find out its position at a given time. Alternative technology could be Global Positioning System.

### List of Reference Numerals and Definitions

- 10: Blind node
- 20: Reference (or Mobile) Node
- 21: Reference (or Mobile) Node
- 22: Reference (or Mobile) Node
- 23: Reference (or Mobile) Node

### Definitions

SDS-TWR: symmetrical double sided two way ranging. Technique used to perform ranging between two elements using bidirectional communication. The method uses two delays that naturally occur in signal transmission to range between the elements:
Signal propagation delay between two wireless devices
Processing delay of acknowledgement within a node.
Localization: process or result of at least three SDS TWR of a node with different Reference nodes or with one or several Mobile node at different point in time (considering that the mobile nodes are moving faster than the blind node) Node: element which is capable of transmitting and receiving
Reference Node: element which is capable of transmitting and receiving, and whose location is fixed and known
Mobile Node: element which is capable of transmitting and receiving, and whose location is changing but can be known at a certain time.
Blind Node: element which is capable of transmitting and receiving, and whose location is changing and undefiled
Initiator: Node which initiate the localization process
RSSI: Received signal strength indicator
Angle of arrival: technique used to measure the angle of arrival of a RF signal.
Tx: transmission
Rx: Reception
Broadcast: to send a packet to all nodes in range
ID: identifier of the node

## Claims

1. Method for carrying out a Two Way Ranging, TWR, between a blind node (10) whose position is unknown and to be determined and at least one reference or mobile node (20, 21, 22, 23) whose position is known in order to determine the location of the blind node, wherein the blind node and the reference or mobile node comprise wireless transceivers for transmitting and receiving radio signals, **characterized in that** the Two Way Ranging is initiated by the blind node.

2. Method according to claim 1, **characterized in that** the blind node (10) initiates Two Way Ranging by switching to a transmitting mode and broadcasting a data packet containing an Identifier, ID.

3. Method according to any of claims 1 and 2, **characterized in that** after broadcasting the data packet containing the identifier the blind node (10) switches to a receiving mode and waits for response messages from reference or mobile nodes which received the data packet.

4. Method according to any of claims 1 to 3, **characterized in that** after receipt of the,response messages from the reference or mobile nodes (20-23) the blind node (10) selects at least one of these reference or mobile nodes (20-23) for carrying out TWR procedures, respectively.

5. Method according to any of claims 1 to 4, **characterized in that** the blind node (10) starts TWR procedures with each of the selected reference or mobile nodes (20-23) in a sequential order.

6. Method according to any of claims 1 to 3, **characterized in that** any of the reference nodes (20-23) which receive the data packet containing the identifier from the blind node (10), one by one start a TWR procedure with the blind node in a sequential order.

7. Method according to any of claims 1 to 6, **characterized in that** at the end of or during the TWR procedure each reference or mobile node (20-23) transmit its measurement values to the blind node (10) for further processing.

8. Method according to any of claims 1 to 7, **characterized in that** the blind node (10) determines its location by using the measurement values from the TWR procedures carried out with the selected reference or mobile nodes (20-23).

9. Method according to any of claims 1 to 8, **characterized in that** each reference or mobile node (20-23) transmits and receives signals during a defined time slot.

10. Method according to claim 9, **characterized in that** hat the time slot is assigned to the reference or mobile nodes (20-23) during a configuration procedure prior to the TWR procedure.

11. Method according to claim 9, **characterized in that that** the time slot is randomly assigned to the reference or mobile nodes (20-23).

12. Method according to any of claims 1 to 11, **characterized in that** a TWR is carried out on demand of the blind node (10).

13. Method according to claim 12, **characterized in that** the TWR on demand is initialized by an event at any point in time, wherein the event can be sensor based, e.g. push button, motion, temperature, humidity, or communication based, e.g. by using other communication means, or time based.

14. Method according to any of claims 1 to 13, **characterized in that** distance or location information is calculated at the blind node, and the blind node can display this information to a user by means of an embedded display or other optical or acoustical elements.

15. Method according to any of claims 1 to 14, **characterized in that** a mobile node is a node which is moving and which is able to determine its position at a given time.

16. Method according to any of claims 1 to 15, **characterized in that** a mobile node is a blind node who is able to realize localization with reference nodes and which knows the exact position of these reference nodes.

17. Method according to any of claims 1 to 16, **characterized in that** the mobile node uses a Global Positioning System for determining its position.

18. Method according to any of claims 1 to 17, **characterized in that** a Symmetrical Double Sided Two Way Ranging procedure, SDS TWR, is used.

19. Data processing software program comprising a program code which performs a method according to any of the claims 1-18 when it is executed on a suitable data processing system.

20. Data processing program product comprising a program code which is executable on a data processing system for performing a method according to any of the claims 1-18.

21. System for performing a method according to any of the claims 1-18, comprising a blind node (10) with a wireless transceiver for transmitting and receiving radio signals, and at least one reference or mobile node (20-23) with a wireless transceiver for transmitting and receiving radio signals.
